# EUROPEAN PATENT APPLICATION

(11) **EP 1 108 893 A2**
(43) Date of publication of application: **20.06.2001**
(21) Application number: 00311165.5
(22) Date of filing: 14.12.2000
(51) Int. Cl.: F04C 29/04

(54) **Temperature control system for vacuum pumps**

(30) Priority: 17.12.1999 GB 9929987
(71) Applicant: The BOC Group plc, Windlesham Surrey GU20 6HJ (GB)
(72) Inventor: Schofield, Nigel Paul, Horsham, West Sussex RH12 2NT (GB)
(74) Representative: Bousfield, Roger James

(57) **Abstract**

A temperature control system for a vacuum pump comprising means through which can flow a temperature control fluid, and a thermal resistor located between said means and a surface of the vacuum pump whose temperature is to be controlled.

## Description

This invention relates to temperature control systems for vacuum pumps and in particular cooling systems for vacuum pumps.

Vacuum pumps, for example, screw pumps used in the semiconductor manufacturing industry are often operated at high temperatures to prevent the condensation of process by-products within the pump. Typical operating temperatures are in the region of 100° to 130°C. However, to prevent the pumps overheating it is necessary to remove some heat by cooling. In the past this has been effected by an indirect system using a coolant for example oil or water to remove heat from the vacuum pump. The heated coolant is itself then cooled in a heat exchanger and recirculated.

However, it has been known for the coolant to extract too much heat from the vacuum pump leading to problems such as the coolant boiling or causing scale to form in the pipes carrying the coolant which leads to blockage of said pipes.

It is an aim of the invention to obviate the above described problems by using a thermal resistor between the vacuum pump to be cooled and the pipes or other means through which the coolant flows.

According to the invention, a temperature control system for a vacuum pump comprises means through which can flow a temperature control fluid, and a thermal resistor located between said means and a surface of the vacuum pump whose temperature is to be controlled.

Preferably said means is a cooling plate and the temperature control fluid is water.

In one embodiment the thermal resistor is a sheet of rubber or rubber-like material. Alternatively, the thermal resistor may be a narrow air gap.

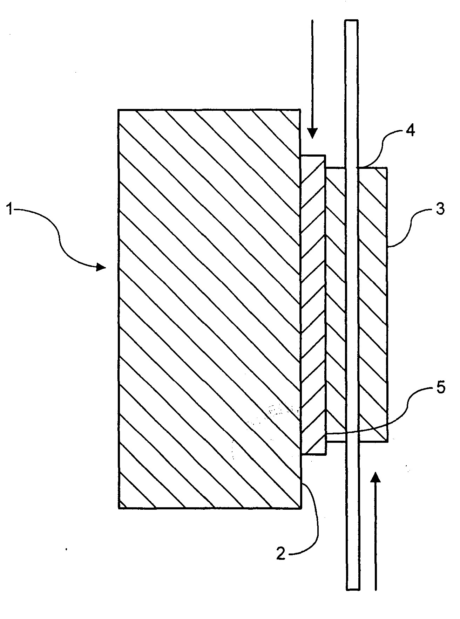

An embodiment of the invention will now be described, by way of example, reference being made to the Figure of the accompanying diagrammatic drawing which is a cross-section through a temperature control system for a vacuum pump according to the present invention.

As shown, a vacuum pump 1, for example a screw pump in operation has a portion of its surface 2 cooled by a cooling plate 3 through which a temperature control fluid for example water can flow via passageways 4 (only one shown).

According to the present invention, a thermal resistor 5 in the form of a sheet of rubber or like temperature resistant material is located on the surface 2 of the pump 1 between said surface 2 and the cooling plate 3.

It has been found that by utilising the thermal resistor 5 and removing heat from over a relatively large surface area the temperature reached by the water is not sufficient to permit boiling and furthermore the scaling effect is also inhibited.

The thermal resistor 5 can be, as described, a sheet of rubber or similar material. Alternatively the cooling plate 3 can be mounted a very small distance from said surface 2 such that a small air gap is used as the thermal resistor.

## Claims

1. A temperature control system for a vacuum pump comprising means through which can flow a temperature control fluid, and a thermal resistor located between said means and a surface of the vacuum pump whose temperature is to be controlled.

2. A temperature control system as claimed in Claim 1, in which the means is a cooling plate and the temperature control fluid is water.

3. A temperature control system as claimed in Claim 1 or 2, in which the thermal resistor is sheet of rubber.

4. A temperature control system as claimed in Claim 1 or 2 in which the thermal resistor is a narrow air gap.

5. A vacuum pump incorporating a temperature control system as claimed in any one of claims 1 to 4.

6. A vacuum screw pump incorporating a temperature control system as claimed in any one of claims 1 to 4.
